# EUROPÄISCHE PATENTSCHRIFT

(11) **EP 3 656 494 B1**
(45) Veröffentlichungstag und Bekanntmachung des Hinweises auf die Patenterteilung: **01.11.2023**
(21) Anmeldenummer: 19193507.1
(22) Anmeldetag: 26.08.2019
(51) Int. Cl.: B23B 51/00

(54) **STUFENBOHRER**
STEP DRILL
FORET ÉTAGÉ

(30) Priorität: 26.11.2018 DE 202018106720 U
(43) Veröffentlichungstag der Anmeldung: 27.05.2020
(73) Patentinhaber: Heller Tools GmbH, 49413 Dinklage (DE)
(72) Erfinder: LAMPE, Rainer, 49413 Dinklage (DE)
(74) Vertreter: Gottschald Patentanwälte Partnerschaft mbB

(56) Entgegenhaltungen:
- EP-A2- 0 941 793
- EP-A2- 1 112 808
- DE-A1- 3 003 696
- DE-A1-102011 114 412
- DE-U1-202016 103 483
- US-A1- 2013 213 717
- US-B2- 9 434 009

## Beschreibung

Die Erfindung betrifft einen Stufenbohrer gemäß dem Oberbegriff des Anspruchs 1 sowie ein Verfahren zur Herstellung eines Stufenbohrers. Ein solcher Stufenbohrer und ein solches Verfahren sind aus der US 9,434,009 B2 bekannt.

Der in Rede stehende Stufenbohrer eignet sich insbesondere für das Bohren in Beton oder Stahlbeton, aber auch in sonstigem Mauerwerk, Fels oder dergleichen. Er ist für den Einsatz in Verbindung mit einer Hammer-, Schlag- und/oder Drehbohrvorrichtung vorgesehen. Für die Kopplung mit der jeweiligen Bohrvorrichtung weist der Stufenbohrer einen Einsteckabschnitt auf. Daran schließt sich der Bohrerschaft und schließlich der Bohrkopf an.

Ein bekannter Stufenbohrer (US 9,434,009 B2), von dem die Erfindung ausgeht, weist einen Bohrkopf mit einer Vorbohrstufe zum Bohren eines Bohrlochs mit einem ersten Durchmesser und mit einer Aufbohrstufe zum Erweitern des mit der Vorbohrstufe gebohrten Bohrloches auf einen größeren Durchmesser auf. Die Aufbohrstufe ist zur Vorbohrstufe entlang der Bohrerlängsachse des Stufenbohrers versetzt angeordnet. Darüber hinaus weist der Stufenbohrer eine Absaugkanalanordnung mit einem Absaugkanal auf. Die Schneide der Vorbohrstufe sowie auch die Schneide der Aufbohrstufe sind jeweils vom Grundkörper des Stufenbohrers selbst gebildet, sind also integral mit dem Grundkörper geformt.

Die Schneiden der Vorbohrstufe und der Aufbohrstufe unterliegen einem vergleichsweise großen Verschleiß, weshalb grundsätzlich bei Bohrern angestrebt wird, ihre Standzeit zu verbessern.

Der Erfindung liegt das Problem zugrunde, den bekannten Stufenbohrer derart auszugestalten und weiterzubilden, dass dessen Standzeit verbessert wird.

Das obige Problem wird durch die Merkmale des Anspruchs 1 gelöst.

Wesentlich ist die grundsätzliche Überlegung, separate Schneideinsätze für die Vorbohrstufe und die Aufbohrstufe vorzusehen. Durch die Verwendung von Schneideinsätzen zum Ausbilden der Schneide können erheblich härtere Materialien verwendet werden und so der Verschleiß des Bohrers reduziert und seine Standzeit entsprechend verbessert werden. Auch kann die Bohrgeschwindigkeit gesteigert werden. Zudem lässt sich ein solcher Stufenbohrer besonders kostengünstig herstellen, da nur die Schneideinsätze aus einem besonders harten und widerstandsfähigen Material gebildet werden müssen. Hierdurch ist der Bohrer zudem kostengünstig produzierbar.

Im Einzelnen wird vorgeschlagen, dass eine Schneide der Vorbohrstufe durch mindestens einen Schneideinsatz gebildet wird, dass eine Schneide der Aufbohrstufe durch mindestens einen separaten Schneideinsatz gebildet wird und dass die Schneideinsätze an einem den Bohrkopf umfassenden Grundkörper angeordnet sind.

In einer Weiterbildung der Erfindung gemäß Anspruch 2 weist der Grundkörper des Stufenbohrers Aufnahmen für die Schneideinsätze auf. Durch einen solchen Aufbau des Stufenbohrers kann dieser besonders günstig in verschiedenen Varianten hergestellt werden, indem der Grundkörper entsprechend den jeweiligen Anforderung angepasst gefertigt wird. Je nach Ausgestaltung und Bohrlochgeometrieziel sind verschiedene Ausgestaltungen des Grundkörpers und der Anordnung der Schneideinsätze vorteilhaft.

Um beim Bohren die Umgebung mit möglichst wenig Bohrmehl zu belasten sowie die Standzeit und die Bohrgeschwindigkeit weiter zu verbessern, wird vorgeschlagen, den Stufenbohrer und insbesondere die Absaugkanalanordnung gemäß zumindest einem der Merkmale der Ansprüche 3 bis 6 auszubilden. Insbesondere das Absaugen des Bohrmehls durch das Innere des Stufenbohrers anstelle eines Abführens durch eine oder mehrere außenliegende Wendelnuten sowie die spezifischen beschriebenen Anordnungen der Absaugöffnungen ermöglichen ein besonders effektives Absaugen des beim Bohren entstehenden Bohrmehls.

In den Ansprüchen 7 bis 12 sind bevorzugte Ausgestaltungen der Vorbohrstufe beziehungsweise der Aufbohrstufe sowie bevorzugte Anordnungen der Schneideinsätze am Stufenbohrer beschrieben. Durch entsprechende Anordnungen kann die Geometrie einer Bohrung beeinflusst werden.

Die Ansprüche 13 und 14 beschreiben bevorzugte Aufbauten des Stufenbohrers. Diese ermöglichen eine einfache und kostengünstige Fertigung deselben.

Nach einer weiteren Lehre gemäß Anspruch 15, der eigenständige Bedeutung zukommt, wird ein Verfahren zur Herstellung eines Stufenbohrers beansprucht, bei dem eine entlang der Bohrerlängsachse verlaufende Längsbohrung in den Grundkörper gebohrt, insbesondere tieflochgebohrt, wird und bei dem eine zur Bohrerlängsachse winklige Querbohrung in den Grundkörper gebohrt wird, derart, dass die Längsbohrung und die Querbohrung miteinander verbunden sind. Es darf auf alle Ausführungen zu dem vorschlagsgemäßen Stufenbohrer verwiesen werden.

Anspruch 16 betrifft die Herstellung von Aufnahmen für die Schneideinsätze und das Einsetzen selbiger in die Aufnahmen.

Im Folgenden wird die Erfindung anhand einer lediglich Ausführungsbeispiele darstellenden Zeichnung näher erläutert. In der Zeichnung zeigt
- Fig. 1: eine dreidimensionale Darstellung eines vorschlagsgemäßen Stufenbohrers in einer perspektivischen Ansicht,
- Fig. 2: eine Explosionsdarstellung des Stufenbohrers aus Fig. 1,
- Fig. 3: eine Schnittansicht des Stufenbohrers gemäß Fig. 1 und
- Fig. 4: a) eine Aufsicht auf die Bohrerspitze des Stufenbohrers aus Fig. 1, b) eine Aufsicht gemäß eines weiteren Ausführungsbeispiels und c) eine Aufsicht gemäß noch eines weiteren Ausführungsbeispiels.

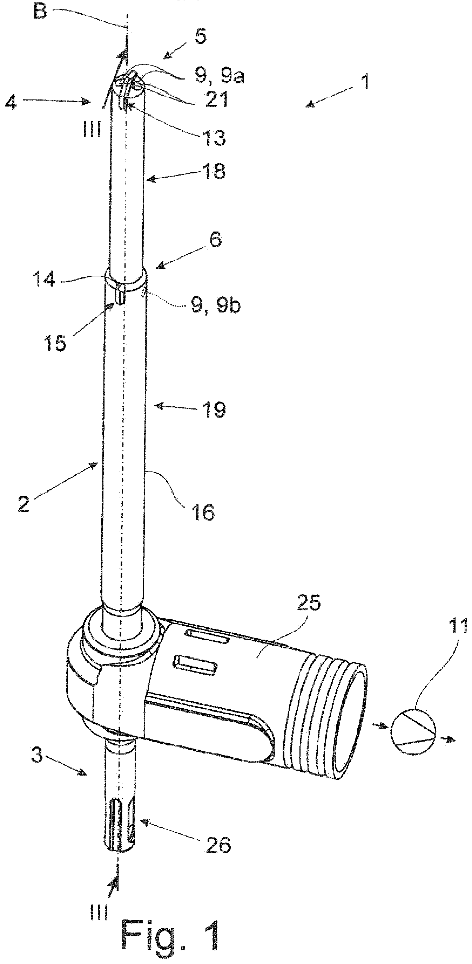

In der Fig. 1 ist ein Stufenbohrer 1 mit einem Bohrerschaft 2, mit einem Einsteckende 3 und einem an dem Einsteckende 3 abgewandten Ende des Bohrerschafts 2 angeordneten Bohrkopf 4 gezeigt. Im Ausführungsbeispiel handelt es sich bei dem Stufenbohrer 1 um einen Gesteinsbohrer, welcher sich für die Bearbeitung von Beton oder Stahlbeton, Mauerwerk, Fels oder dergleichen eignet.

Der Bohrkopf 4 weist eine Vorbohrstufe 5 zum Bohren eines Bohrloches mit einem ersten Durchmesser auf. Ferner weist der Bohrkopf mindestens eine Aufbohrstufe 6 zum Erweitern eines mit der Vorbohrstufe 5 gebohrten Bohrloches auf einen größeren Durchmesser auf. Die Aufbohrstufe 6 ist hier zur Vorbohrstufe 5 entlang einer Bohrerlängsachse B versetzt angeordnet, wie dies in der Fig. 1 gezeigt ist. Die Bohrerlängsachse B entspricht hier der Rotationsachse des Stufenbohrers 1 beim Bohren.

Ferner weist der Stufenbohrer 1 mindestens eine Absaugkanalanordnung 7 mit mindestens einem Absaugkanal 8 auf, der von mindestens einer Absaugöffnung 9 des Bohrkopfs 4 durch das Innere des Bohrerschafts 2 zu einer Austrittsöffnung 10 zum Abführen von Bohrmehl zu einer Absaugeinrichtung 11 führt. Hierdurch kann das beim Bohren entstehende Bohrmehl besonders effektiv und unter möglichst geringer Belastung der Umgebung abgesaugt werden.

Erfindungsgemäß wird eine Schneide 12 der Vorbohrstufe 5 durch mindestens einen Schneideinsatz 13 gebildet. Ferner ist vorgesehen, dass eine Schneide 14 der Aufbohrstufe 6 durch mindestens einen separaten Schneideinsatz 15 gebildet wird. Die Verwendung von Schneideinsätzen 13, 15 in der Vorbohrstufe 5 und in der Aufbohrstufe 6 ermöglicht eine kostengünstige Produktion des Stufenbohrers 1, eine hohe Standzeit des Stufenbohrers 1 sowie eine gesteigerte Bohrgeschwindigkeit.

Eine Bohrstufe 5, 6 wird hier und vorzugsweise als die Einrichtung betrachtet, welche Material abträgt. Im Ausführungsbeispiel wird die Vorbohrstufe 5 durch die Schneiden 12 des Schneideinsatz 13 gebildet und die Aufbohrstufe durch die Schneiden 14 der Schneideinsätze 15.

Der Stufenbohrer 1 kann darüber hinaus weitere, nicht gezeigte, Aufbohrstufen aufweisen, welche weitere Erweiterungen des Durchmessers des Bohrlochs ermöglichen.

Die Schneide 12 beziehungsweise Schneiden 12 der Vorbohrstufe 5 bilden hier und vorzugsweise die Hauptschneide, während die Schneide 14 beziehungsweise die Schneiden 14 der Aufbohrstufe 6 Nebenschneiden bilden.

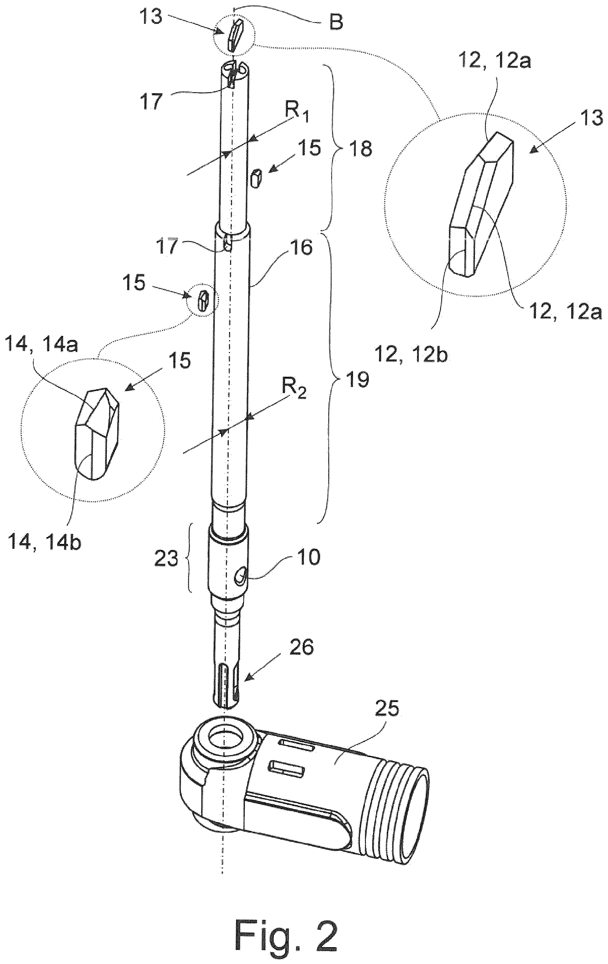

Wie der Explosionsdarstellung der Fig. 2 entnommen werden kann, weist der Stufenbohrer 1 einen den Bohrerschaft 2, das Einsteckende 3 und den Bohrkopf 4 aufweisenden Grundkörper 16 auf, der hier mit Aufnahmen 17 für die Schneideinsätze 13, 15 versehen ist. Hier und vorzugsweise weist der Grundkörper 16 einen ersten und einen zweiten axialen, hier und vorzugsweise zylindrischen, Abschnitt 18, 19 auf. Die Abschnitte 18, 19 bilden hier zusammen den Bohrkopf 4. Je einer der Abschnitte 18, 19 weist mindestens eine Aufnahme 17 für den jeweiligen Schneideinsatz 13, 15 auf.

Der erste Abschnitte 18 und der zweite Abschnitt 19 weisen einen unterschiedlichen Radius R₁, R₂ auf, wie dies in der Fig. 2 gezeigt ist. Der Radius R₁ des ersten Abschnitts 18, welcher die Aufnahme für den jeweiligen Schneideinsatz 13 der Vorbohrstufe 5 aufweist, ist kleiner, als der Radius R₂ des zweiten Abschnitts 19, welcher die Aufnahme 17 für den jeweiligen Schneideinsatz 15 der Aufbohrstufe 6 aufweist.

Auch ist der radiale Abstand zwischen dem radial äußersten Punkt bzw. der radial äußersten Kante des jeweiligen Schneideinsatzes 13, 15 und der Bohrerlängsachse B für den jeweiligen Schneideinsatz 13 der Vorbohrstufe 5 kleiner als für den jeweiligen Schneideinsatz 15 der Aufbohrstufe 6.

Alternativ kann der Grundköper 16 auch nur einen axialen, insbesondere zylindrischen, Abschnitt aufweisen, welcher die Aufnahmen für die Schneideinsätze 13, 15 der Vorbohrstufe 5 sowie der Aufbohrstufe 6, insbesondere vollständig, aufweist. Der Durchmesser dieses einen Abschnitts ist dann vorzugsweise im Wesentlichen konstant.

Die Aufnahmen 17 für die Schneideinsätze werden wie in der Fig. 2 gezeigt, durch Aufnahmenuten gebildet. In diesem Fall lassen sie sich besonders einfach und kostengünstig mit einem Fräswerkzeug herstellen.

Wie der Fig. 2 weiter entnommen werden kann, werden im Ausführungsbeispiel die Aufnahmen 17 für die Schneideinsätze 15 der Aufbohrstufe 6 in dem ersten und den zweiten Abschnitt 18, 19 ausgebildet. Die Schneideinsätze 15 der Aufbohrstufe 6 sind im Bereich des Übergangs zwischen den beiden Abschnitten 18, 19 angeordnet. Vorzugsweise erstrecken sich die Aufnahmen 17 zu mindestens 50%, weiter vorzugsweise zu mindestens 80% über den zweiten Abschnitt 19. Hierdurch werden die Schneideinsätze der Aufbohrstufe 6 fest und sicher im Stufenbohrer 1 gehalten und gegenüber den Bohrkräften abgestützt.

Der Bohrmehlabtransport vom Bohrkopf 4 erfolgt hier und vorzugsweise durch die Absaugkanalanordnung 7, sodass der Abtransport damit durch das Innere des Bohrerschafts 2 erfolgt. Der Bohrerschaft 2 ist hier Bestandteil des Grundkörpers 16.

Wie die Ausführungsbeispiele zeigen, ist der Stufenbohrer wendelnutlos ausgebildet. Besonders bevorzugt weist der Stufenbohrer keine äußeren Abfuhrnuten für das Bohrmehl auf. Die Oberfläche des Grundkörpers 16 ist im Wesentlichen eben-zylindrisch ausgebildet. Dabei kann er jedoch zylindrische Abschnitte unterschiedlicher Radii aufweisen, wie in den Figuren gezeigt.

Mindestens eine Absaugöffnung 9 ist eine im Bereich der Vorbohrstufe 5 angeordnete Vorbohrstufen-Absaugöffnung 9a. Im Ausführungsbeispiel weist die Vorbohrstufen-Absaugöffnung 9a mit ihrer Öffnung im Wesentlichen in axialer Richtung des Stufenbohrers 1. Die Vorbohrstufen-Absaugöffnung 9a ist an der Stirnseite 20 des Bohrkopfes 4 angeordnet. Vorzugsweise ist je mindestens genau eine Vorbohrstufen-Absaugöffnung 9a beidseitig des jeweiligen - im Ausführungsbeispiel einen - Schneideinsatzes 13 der Vorbohrstufe 5 angeordnet. Die beiden Vorbohrstufen-Absaugöffnungen 9a des Ausführungsbeispiels sind je durch eine Absaugbohrung 21 in der Stirnseite 20 des Stufenbohrers 1 gebildet.

Gemäß weiterer hier nicht dargestellter Ausführungsvarianten können die Vorbohrstufen-Absaugöffnungen 9a auch mit ihrer Öffnung in eine radiale Richtung des Stufenbohrers 1 weisen oder es können zusätzliche Vorbohrstufen-Absaugöffnungen 9a vorgesehen sein, die mit ihrer Öffnung in eine radiale Richtung des Stufenbohrers 1 weisen.

Gemäß eines bevorzugten Ausführungsbeispiels sind im Bereich der Aufbohrstufe 6 keine Absaugöffnungen 9 vorgesehen. In dem hier bevorzugten Fall sind sogar alle Absaugöffnungen 9 Vorbohrstufen-Absaugöffnungen 9. Diese ermöglichen einen besonders effektiven Bohrmehlabtransport aus dem Bohrloch. Dadurch, dass nur Absaugöffnungen 9 im Bereich der Vorbohrstufe vorgesehen sind, wird der gesamte Saugdruck zum Absaugen von Bohrmehl an der Vorbohrstufe 5 aufgebaut. Das an der Aufbohrstufe 6 anfallende Bohrmehl kann dabei gegebenenfalls entlang des ersten Abschnitts 18 des Grundkörpers 16, welcher die Aufnahme 17 für den jeweiligen Schneideinsatz 13 der Vorbohrstufe 5 aufweist, zu den Vorbohrstufen-Absaugöffnungen 9a gesogen und dann durch die Absaugkanalanordnung 7 aus dem Bohrloch entfernt werden. Insbesondere durch das Überstehen des Schneideinsatzes 13 der Vorbohrstufe 5 gegenüber dem Grundkörper 16 kann ein Kanal zwischen der Außenfläche des Grundkörpers 16 und der Materialinnenseite des Bohrlochs entstehen, durch den das Bohrmehl in Bohrrichtung zu der Vorbohrstufen-Absaugöffnung 9a oder den Vorbohrstufen-Absaugöffnungen 9a und dort in den Absaugkanal 8 gesaugt wird. Zusätzlich oder alternativ können ein oder mehrere Kanäle, über die das Bohrmehl in Bohrrichtung zu der Vorbohrstufen-Absaugöffnung 9a oder den Vorbohrstufen-Absaugöffnungen 9a geleitet wird, durch radial außenseitige Abführnuten im ersten Abschnitt 18 gebildet werden, die sich insbesondere ausschließlich in dem ersten Abschnitt 18 erstrecken und vorzugsweise parallel zur Bohrerlängsachse B verlaufen.

Alternativ kann mindestens eine Absaugöffnung 9 eine im Bereich der Aufbohrstufe 6 vorgesehene Aufbohrstufen-Absaugöffnung 9b sein. Die Aufbohrstufen-Absaugeinrichtung 9b ist hier und vorzugsweise eine in eine radiale Richtung des Stufenbohrers 1 gerichtete Absaugöffnung 9. Diese optionale Aufbohrstufen-Absaugöffnung 9b ist schematisch in gestrichelten Linien in der Fig. 1 dargestellt.

Hier und vorzugsweise ist die Aufbohrstufen-Absaugöffnung 9b von der Bohrspitze 22 aus gesehen in axialer Richtung hinter einer axialen Schneide 14 mindestens eines Schneideinsatzes 15 der Aufbohrstufe vorgesehen. Die Aufbohrstufen-Absaugöffnung 9b ist somit vollständig in dem Abschnitt 19 des Grundkörpers 16 angeordnet, welcher den größeren Radius R₂ aufweist. Sie geht vorzugsweise nicht in den ersten Abschnitt 18 des Grundkörpers 16 über, welcher den geringeren Radius R₁ aufweist. Der Radius R₁ kann beispielsweise 5mm und der Radius R₂ kann beispielsweise 6mm betragen.

Sind mehrere Aufbohrstufen-Absaugöffnungen 9b vorgesehen, sind diese vorzugsweise in gleichem Winkelabstand um die Bohrerlängsachse B angeordnet. In dem Ausführungsbeispiel der Fig. 1, in dem eine der Aufbohrstufen-Absaugöffnungen 9b in gestrichelten Linien dargestellt ist, sind zwei Aufbohrstufen-Absaugöffnungen 9b vorgesehen. Sie liegen sich diametral gegenüber. Die Aufbohrstufen-Absaugöffnungen 9b sind hier in einem Winkelabstand von 90° zu den Schneideinsätzen 15 der Aufbohrstufe 6 angeordnet.

Im Ausführungsbeispiel und vorzugsweise weist die Vorbohrstufe 5 nur einen Schneideinsatz 13 auf. Hier und vorzugsweise bildet der Schneideinsatz 13 der Vorbohrstufe 5 die Bohrerspitze 22 aus. Der Schneideinsatz 13 weist hier und vorzugsweise mindestens eine im Wesentlichen axial wirkende Schneide 12a und an seinen beiden Enden je eine radial wirkende Schneide 12b auf.

Die Aufbohrstufe 6 weist im Ausführungsbeispiel der Figuren 1 und 2 genau zwei Schneideinsätze 15 auf. Vorzugsweise weist sie mindestens, insbesondere genau, einen Schneideinsatz 15, vorzugsweise mindestens, insbesondere genau, zwei Schneideinsätze 15 oder mindestens, insbesondere genau, drei Schneideinsätze 15 auf. Darüber hinaus können auch weitere Schneideinsätze 15 vorgesehen sein.

Der jeweilige Schneideinsatz 15 der Aufbohrstufe weist hier und vorzugsweise eine im Wesentlichen axial wirkende Schneide 14a und eine, insbesondere genau eine, radial wirkende Schneide 14b auf.

Angeordnet sind die Schneideinsätze 15 der Aufbohrstufe 6 vorzugsweise in gleichem Winkelabstand um die Bohrerlängsachse B. Vorzugsweise sind sie symmetrisch um die Bohrerlängsachse B angeordnet, wie das im Ausführungsbeispiel der Fig. 1 mit den diametral gegenüberliegenden Schneideinsätzen 15 der Fall ist.

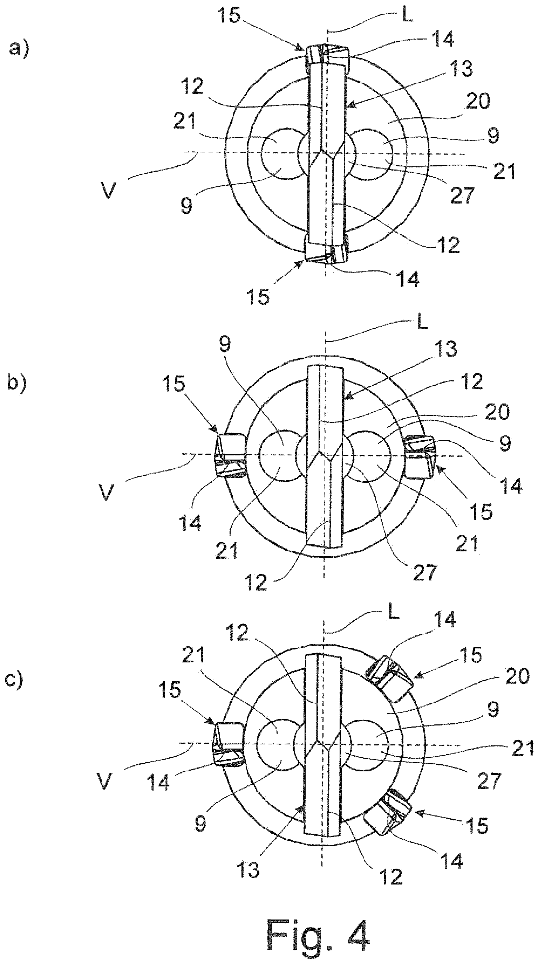

Hier und vorzugsweise, wie im Ausführungsbeispiel der Fig. 1 dargestellt, erstreckt sich bei einer Projektion des Stufenbohrers 1 in Richtung der Bohrerlängsachse B der Schneideinsatz 13 der Vorbohrstufe 5 entlang einer Längsachse L, die orthogonal zur Bohrerlängsachse B verläuft. Dies ist in der Fig. 4 gezeigt. Weist die Vorbohrstufe 5 mehrere Schneideinsätze 13 auf (hier nicht dargestellt), sind die Schneideinsätze 13 der Vorbohrstufe 5 vorzugsweise auf einer Längsachse, die orthogonal zur Bohrerlängsachse B verläuft, angeordnet.

Wie der Fig. 4a entnommen werden kann, sind die Schneideinsätze 15 der Aufbohrstufe 6 hier und vorzugsweise auf der Längsachse L angeordnet. Besonders bevorzugt verlaufen die Mittellinien der Schneideinsätze 15 der Aufbohrstufe 6 und die Mittellinien der Schneideinsätze 13 der Vorbohrstufe 5 auf dieser Längsachse L. Hierdurch kann eine besonders einfache Fertigung erreicht werden.

Diese Anordnung der Schneideinsätze 13, 15 kann insgesamt ein unrundes Bohrloch (Polygon), welches geometriebedingt einen besonders hohen Dübelauszugswert bereitstellt, erzeugt werden. Dies hat den Vorteil, dass das von der Vorbohrstufe 5 erzeugte unrunde Bohrloch von der Aufbohrstufe 6 in gleicher Weise erweitert wird. Die Schneideinsätze 15 der Aufbohrstufe 6 erzeugen also im Wesentlichen im Querschnitt zur Bohrerlängsachse B dieselbe, aber vergrößerte, Bohrlochform und Bohrlochausrichtung wie die Schneideinsätze 13 der Vorbohrstufe 5.

Auch in dem Ausführungsbeispiel der Fig. 4b erstreckt sich der Schneideinsatz der Vorbohrstufe in einer Projektion des Stufenbohrers 1 in Richtung der Bohrerlängsachse B entlang einer Längsachse L, die orthogonal zur Bohrerlängsachse B verläuft. Wie zuvor in Zusammenhang mit dem Ausführungsbeispiel der Fig. 4a beschrieben, sind, falls mehrere Schneideinsätze 13 in der Vorbohrstufe 5 vorgesehen sind, die Schneideinsätze 13 der Vorbohrstufe 5 vorzugsweise auf einer Längsachse, die orthogonal zur Bohrerlängsachse B verläuft, angeordnet.

In einer Projektion des Stufenbohrers 1 in Richtung der Bohrerlängsachse B liegen in der Fig. 4b die Mittelachsen der Schneideinsätze 15 der Aufbohrstufe 6 auf einer Verbindungsgeraden V. Die Längsachse L ist dabei zu der Verbindungsgeraden V vorzugsweise winkelig angeordnet. Besonders bevorzugt ist, wie im Ausführungsbeispiel der Fig. 4b gezeigt, die Längsachse L in einem Winkel von 90° zu der Verbindungsgeraden V angeordnet. Bei einer solchen Ausgestaltung des Stufenbohrers 1 lassen sich besonders runde Bohrlöcher erzeugen.

Ein weiteres Ausführungsbeispiel ist in der Fig. 4c gezeigt. Auch hier ist, ebenso wie in den Ausführungsbeispielen der Figuren 4a und 4b, ein einziger Schneideinsatz 13 für die Vorbohrstufe vorgesehen. Grundsätzlich sind hier jedoch auch weitere Schneideinsätze 13 in der Vorbohrstufe 5 denkbar.

Im Unterschied zu den Ausführungsbeispielen der Fig. 4a und 4b sind in der Aufbohrstufe 6 im Ausführungsbeispiel der Fig. 4c drei Schneideinsätze 15 vorgesehen. Diese sind hier und vorzugsweise in einem gleichmäßigen Winkelabstand um die Bohrerlängsachse B angeordnet. Im Ausführungsbeispiel beträgt der Winkelabstand 120°. Besonders vorteilhaft ist, wenn sie zu einer Längsachse L des Schneideinsatzes 13 der Vorbohrstufe 5, welche orthogonal zur Bohrerlängsachse B verläuft, versetzt angeordnet sind. Auch mit dieser Konfiguration können besonders runde Bohrlöcher erzeugt werden.

Wie in den Figuren 1 bis 4 gezeigt, stehen die Schneideinsätze 13, 15 im Bereich ihrer Aufnahme 17 radial über den Grundkörper 16 hinaus. Im Ausführungsbeispiel und vorzugsweise steht der jeweilige Schneideinsatz 13 der Vorbohrstufe 5 im Bereich seiner Aufnahme 17 0,1 mm bis 1,5 mm radial über den Grundkörper 16 hinaus. Der jeweilige Schneideinsatz 15 der Aufbohrstufe 6 steht vorzugsweise im Bereich seiner Aufnahme 17 0,2 mm bis 1 mm über den Grundkörper 16 hinaus. Besonders bevorzugt stehen die Schneideinsätze 13 der Vorbohrstufe 5 und die Schneideinsätze 15 der Aufbohrstufe 6 unterschiedlich weit über den Grundkörper 16 hinaus. Um die Absaugwirkung von Bohrmehl aus dem Bereich der Aufbohrstufe 6 mittels der Vorbohrstufen-Absaugöffnungen 9a zu verbessern, kann der jeweilige Schneideinsatz 13 der Vorbohrstufe 5 weiter über den Grundkörper 16 hinausstehen, als der jeweilige Schneideinsatz 15 der Aufbohrstufe 6.

Vorzugsweise ist der Bohrkopf 4 des Stufenbohrers 1 achsensymmetrisch und/oder drehsymmetrisch um die Bohrerlängsachse B ausgebildet.

Hier und vorzugsweise weist der Stufenbohrer 1 einen Absaugabschnitt 23 auf. Im Ausführungsbeispiel ist der Absaugabschnitt 23 integral vom Grundkörper 16 ausgebildet. Der Grundkörper 16 ist mit dem ersten Abschnitt 18, gegebenenfalls mit dem zweiten Abschnitt 19, und mit dem Absaugabschnitt 23 aus einem Stück gefertigt. In den Ausführungsbeispielen weist der Absaugabschnitt 23 einen größeren Radius als der jedenfalls überwiegende Teil des zweiten Abschnitts 19 auf. Der Absaugabschnitt 23 weist eine Querbohrung 24 auf, welche einen Abschnitt der Absaugkanalanordnung 7 bildet und die Austrittsöffnung 10 zum Abführen des Bohrmehls aus dem Stufenbohrer 1 bereitstellt. Diese Austrittsöffnung 10 ist im Absaugabschnitt 23 angeordnet.

Um den notwendigen Saugdruck bereitzustellen und das Bohrmehl aus der Absaugkanalanordnung 7 abzuführen, ist hier und vorzugsweise ein Absaugadapter 25 vorgesehen, der einen, insbesondere radialen, Stutzen zum Anschluss einer Absaugeinrichtung 11, beispielsweise eines elektrischen Staubsaugers, aufweist. Der Absaugadapter 25 ist hier mit dem Absaugabschnitt 23 des Stufenbohrers 1 verbunden und axial beabstandet zu dem Bohrkopf 4 angeordnet. Die Querbohrung 24 mündet in den Absaugadapter 25, insbesondere in eine um den Absaugabschnitt 23 umlaufende Kammer K des Absaugadapters 25. Der Absaugabschnitt 23 des Stufenbohrers 1 ist dabei relativ zu dem Absaugadapter 25 drehbar.

Vorschlagsgemäß weist der Stufenbohrer 1 einen Einspannabschnitt 26 am Einsteckende 3 auf. Der Einspannabschnitt 26 ist im Ausführungsbeispiel als SDS-Abschnitt, insbesondere als SDS-plus- oder SDSmax-Abschnitt, zur Aufnahme durch das Bohrfutter einer Schlagbohrmaschine ausgebildet. Grundsätzlich kann dieser auch rein zylindrisch für die Aufnahme in einem Spannfutter ausgebildet sein. Der Durchmesser des Einspannabschnitts 26 ist hier und vorzugsweise kleiner als der des

Absaugabschnitts 23. Im Ausführungsbeispiel ist der Einspannabschnitt 26 integral mit dem Grundkörper 16 ausgebildet. Er wird gemeinsam mit dem Grundkörper im Übrigen aus einem Stück gefertigt. Alternativ kann der Einspannabschnitt 26 jedoch auch separat vom Grundkörper 16 hergestellt und mit dem Grundkörper 16 und/oder dem Absaugabschnitt 23 gefügt, insbesondere verlötet oder verschraubt werden.

Zum Herstellen des Absaugkanals 8 ist der Grundkörper 16 gebohrt, insbesondere tieflochgebohrt. Diese Bohrung der Absaugkanalanordnung 7 ist als Längsbohrung 27 ausgeführt. Sie verläuft bevorzugt im Wesentlichen in Richtung der Bohrerlängsachse B. Vorzugsweise verläuft sie parallel, hier koaxial zur Bohrerlängsachse B. Es ist auch ein zur Bohrerlängsachse B geneigter Verlauf der Längsbohrung 27 denkbar. Von einer Tieflochbohrung spricht man in der Regel, wenn ihre Länge mindestens 15-mal so groß ist wie ihr Durchmesser. Die Bohrung ist hier als Sacklochbohrung ausgeführt. Sie mündet hier und vorzugsweise in der Querbohrung 24, insbesondere in deren geschlossenem Ende. Die Querbohrung 24 weist hier und vorzugsweise einen größeren Durchmesser auf als die Längsbohrung 27. Die Querbohrung 24 ist vorzugsweise winkelig zur Längsbohrung 27 und/oder Bohrerlängsachse B gerichtet, insbesondere weist sie einen Winkel von 120° bis 150°, vorzugsweise 135° zur Längsbohrung auf. Sie ist hier und vorzugsweise als Sacklochbohrung ausgeführt.

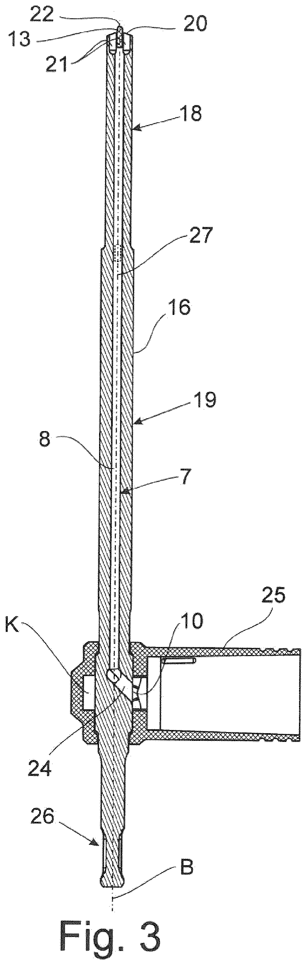

Darüber hinaus weist der Grundkörper 16 eine oder mehrere, insbesondere zwei, Absaugbohrungen 21 auf, welche die Absaugöffnungen 9 der Vorbohrstufe 5 bereitstellen. Diese sind im Ausführungsbeispiel wie in der Fig. 3 gezeigt als Sacklochbohrungen ausgebildet. Sie laufen hier und vorzugsweise parallel zur Längsbohrung 27. Im Ausführungsbeispiel überschneiden sie sich in ihrem Querschnitt mit der Längsbohrung 27, wie in der Fig. 4 gezeigt. Ihre Tiefe beträgt vorzugsweise die einfache bis fünffache Länge der Erstreckung entlang der Bohrerlängsachse B der jeweiligen Schneideinsätze 13 der Vorbohrstufe 5. In dem Fall eines zur Bohrerlängsachse B geneigten Verlaufs der Längsbohrung 27 bildet diese gleichzeitig mindestens eine Absaugöffnung 9 der Vorbohrstufe 5, insbesondere die einzige Absaugöffnung 9 oder alle Absaugöffnungen 9. Die jeweils von der Längsbohrung 27 gebildete Absaugöffnung 9 wird dann nicht durch eine separat hergestellte Absaugbohrung 21 erzeugt.

Die Aufnahmen 17, insbesondere in der Form von Aufnahmenuten, für die Schneideinsätze 13, 15 der Vorbohrstufe 5 sowie der Aufbohrstufe 6 werden vorzugsweise in einem Arbeitsgang hergestellt. Dabei liegen die Aufnahmen 17 für die Schneideinsätze 13, 15 der Vorbohrstufe 5 sowie der Aufbohrstufe 6, insbesondere deren Mittelachsen, orthogonal zur Bohrerlängsachse B in einer Ebene. Weiter vorzugsweise liegt auch die Bohrerlängsachse B in dieser Ebene.

Die Herstellung in einem Arbeitsgang ist beispielsweise dadurch gekennzeichnet, dass in einer Aufspannung und/oder ohne Werkzeugwechsel die Aufnahmen hergestellt werden. Zusätzlich oder alternativ kann die Herstellung in einem Arbeitsgang bedeuten, dass die Aufnahmen parallel hergestellt werden und/oder im selben Arbeitshub hergestellt werden. Alternativ ist natürlich auch eine Herstellung der Aufnahmenuten in separaten Arbeitsgängen denkbar. In einer besonders bevorzugten Ausgestaltung des Verfahrens wird zunächst die Aufnahme 17 der Vorbohrstufe 5 hergestellt und anschließend in einem Arbeitshub die Aufnahmen die Aufnahme 17 der Aufbohrstufe 6.

## Patentansprüche

1. Stufenbohrer, insbesondere Gesteins-Stufenbohrer, eingerichtet für den Einsatz mit einer Schlagbohrmaschine,
mit einem Bohrerschaft (2),
mit einem Einsteckende (3), das einen Einspannabschnitt aufweist, zur Aufnahme durch das Bohrfutter einer Schlagbohrmaschine und
mit einem an dem dem Einsteckende (3) abgewandten Ende des Bohrerschafts (2) angeordneten Bohrkopf (4),
wobei der Bohrkopf (4) eine Vorbohrstufe (5) zum Bohren eines Bohrloches mit einem ersten Durchmesser und mindestens eine Aufbohrstufe (6) zum Erweitern eines mit der Vorbohrstufe (5) gebohrten Bohrloches auf einen größeren Durchmesser aufweist, wobei die Aufbohrstufe (6) zur Vorbohrstufe (5) entlang einer Bohrerlängsachse (B) versetzt angeordnet ist,
wobei der Stufenbohrer (1) mindestens eine Absaugkanalanordnung (7) mit mindestens einem Absaugkanal (8) aufweist, der von mindestens einer Absaugöffnung (9, 9a, 9b) des Bohrkopfs (4) durch das Innere des Bohrerschafts (2) zu einer Austrittsöffnung (10) zum Abführen von Bohrmehl zu einer Absaugeinrichtung (11) führt,
**dadurch gekennzeichnet, dass**
eine Schneide (12) der Vorbohrstufe (5) durch mindestens einen Schneideinsatz (13) gebildet wird, wobeieine Schneide (14) der Aufbohrstufe (6) durch mindestens einen separaten Schneideinsatz (15) gebildet wird und wobeidie Schneideinsätze (13, 15) an einem den Bohrkopf (4) umfassenden Grundkörper (16) angeordnet sind.

2. Stufenbohrer nach Anspruch 1, **dadurch gekennzeichnet, dass** der Grundkörper (16) des Stufenbohrers (1) Aufnahmen (17) für die Schneideinsätze (13, 15) aufweist, vorzugsweise, dass der Grundkörper (16) zwei axiale, insbesondere zylindrische, Abschnitte (18, 19) aufweist, wobei je einer der Abschnitte (18, 19) eine Aufnahme (17) für den jeweiligen Schneideinsatz (13, 15) aufweist, weiter vorzugsweise, dass die zwei Abschnitte (18, 19) jeweils einen unterschiedlichen Radius (R₁, R₂) aufweisen, wobei der Radius (R₁) des ersten Abschnitts (18), welcher die Aufnahme (17) für den jeweiligen Schneideinsatz (13) der Vorbohrstufe (6) aufweist, kleiner ist, als der Radius (R₂) des zweiten Abschnitts, welcher die Aufnahme für den jeweiligen Schneideinsatz (15) der Aufbohrstufe (6) aufweist.

3. Stufenbohrer nach Anspruch 1 oder 2, **dadurch gekennzeichnet, dass** der Stufenbohrer (1) wendelnutenlos ausgebildet ist.

4. Stufenbohrer nach einem der vorhergehenden Ansprüche, **dadurch gekennzeichnet, dass** mindestens eine Absaugöffnung (9) eine im Bereich der Vorbohrstufe (5) angeordnete, vorzugsweise in der Stirnseite (20) des Bohrkopfes (4) angeordnete, Vorbohrstufen-Absaugöffnung (9a) ist, vorzugsweise, dass nur eine einzelne Vorbohrstufen-Absaugöffnung (9a) oder mindestens zwei, insbesondere genau zwei, Vorbohrstufen-Absaugöffnungen (9a) vorgesehen sind, weiter vorzugsweise, dass je mindestens eine Vorbohrstufen-Absaugöffnung (9a) beidseitig des jeweiligen Schneideinsatzes (13) der Vorbohrstufe (5) angeordnet ist.

5. Stufenbohrer nach einem der vorhergehenden Ansprüche, **dadurch gekennzeichnet, dass** alle Absaugöffnungen (9) Vorbohrstufen-Absaugöffnungen (9a) sind, und/oder, dass im Bereich der Aufbohrstufe (6) keine Absaugöffnungen (9) vorgesehen sind.

6. Stufenbohrer nach einem der Ansprüche 1 bis 4, **dadurch gekennzeichnet, dass** mindestens eine Absaugöffnung (9) eine im Bereich der Aufbohrstufe (6) vorgesehene Aufbohrstufen-Absaugöffnung (9b) ist, vorzugsweise, dass die Aufbohrstufen-Absaugöffnung (9b) von der Bohrspitze (22) aus gesehen in axialer Richtung hinter einer im Wesentlichen axialen Schneide (14a) mindestens eines Schneideinsatzes (15) der Aufbohrstufe (6) vorgesehen ist.

7. Stufenbohrer nach einem der vorhergehenden Ansprüche, **dadurch gekennzeichnet, dass** die Vorbohrstufe (5) nur einen Schneideinsatz (13) aufweist und/oder dass der Schneideinsatz (13) der Vorbohrstufe (5) die Bohrerspitze (22) ausbildet.

8. Stufenbohrer nach einem der vorhergehenden Ansprüche, **dadurch gekennzeichnet, dass** die Aufbohrstufe (6) mindestens, insbesondere genau, einen Schneideinsatz (15) aufweist, vorzugsweise, dass die Aufbohrstufe (6) mindestens, insbesondere genau, zwei Schneideinsätze (15) oder mindestens, insbesondere genau, drei Schneideinsätze (15) aufweist.

9. Stufenbohrer nach einem der vorhergehenden Ansprüche, **dadurch gekennzeichnet, dass** die Schneideinsätze (15) der Aufbohrstufe (6) in gleichem Winkelabstand um die Bohrerlängsachse (B) angeordnet sind.

10. Stufenbohrer nach einem der vorhergehenden Ansprüche, **dadurch gekennzeichnet, dass** bei einer Projektion des Stufenbohrers (1) in Richtung der Bohrerlängsachse (B) sich der Schneideinsatz (13) der Vorbohrstufe (5) entlang einer Längsachse (L), die orthogonal zur Bohrerlängsachse (B) verläuft, erstreckt oder die Schneideinsätze (13) der Vorbohrstufe (5) auf einer Längsachse (L), die orthogonal zur Bohrerlängsachse (B) verläuft, angeordnet sind und dass die Schneideinsätze (15) der Aufbohrstufe (6) auf dieser Längsachse (L) angeordnet sind.

11. Stufenbohrer nach einem der vorhergehenden Ansprüche, **dadurch gekennzeichnet, dass** in einer Projektion des Stufenbohrers (1) in Richtung der Bohrerlängsachse (B) sich der Schneideinsatz (13) der Vorbohrstufe (5) entlang einer Längsachse (L), die orthogonal zur Bohrerlängsachse (B) verläuft, erstreckt oder die Schneideinsätze (13) der Vorbohrstufe (5) auf einer Längsachse (L), die orthogonal zur Bohrerlängsachse (B) verläuft, angeordnet sind,
dass in der Projektion des Stufenbohrers (1) in Richtung der Bohrerlängsachse (B) die Mittelachsen der Schneideinsätze (15) der Aufbohrstufe (6) auf einer Verbindungsgeraden (V) liegen und
dass die Längsachse (L) winkelig zu der Verbindungsgeraden (V), vorzugsweise in einem Winkel von 90° zu der Verbindungsgeraden (V), angeordnet ist.

12. Stufenbohrer nach einem der vorhergehenden Ansprüche, **dadurch gekennzeichnet, dass** die Schneideinsätze (13, 15) im Bereich ihrer Aufnahme (17) radial über den Grundkörper (16) hinausstehen, vorzugsweise, dass der jeweilige Schneideinsatz (13) der Vorbohrstufe (5) im Bereich seiner Aufnahme 0,1 mm bis 1,5 mm radial über den Grundkörper (16) hinaussteht und/oder der jeweilige Schneideinsatz (15) der Aufbohrstufe (6) im Bereich seiner Aufnahme (17) 0,2 mm bis 1 mm über den Grundkörper (16) hinaussteht.

13. Stufenbohrer nach einem der vorhergehenden Ansprüche, **dadurch gekennzeichnet, dass** der Stufenbohrer (1) einen Absaugabschnitt (23) und/oder einen Einspannabschnitt (26) am Einsteckende (3) aufweist, vorzugsweise, dass der Absaugabschnitt (23) integral vom Grundkörper (16) ausgebildet ist und/oder dass der Einspannabschnitt (26) separat vom Grundkörper (16) hergestellt und mit dem Grundkörper (16) und/oder dem Absaugabschnitt (23) gefügt, insbesondere verlötet oder verschraubt, ist.

14. Stufenbohrer nach einem der vorhergehenden Ansprüche, **dadurch gekennzeichnet, dass** eine entlang der Bohrerlängsachse (B) verlaufende Längsbohrung (27) in den Grundkörper (16) gebohrt, insbesondere tieflochgebohrt, ist und dass eine zur Bohrerlängsachse (B) winklige Querbohrung (24) in den Grundkörper (16) gebohrt ist, wobei die Längsbohrung (27) und die Querbohrung (24) miteinander verbunden sind und zusammen den Absaugkanal (8) bilden.

15. Verfahren zur Herstellung eines Stufenbohrers (1) nach einem der vorhergehenden Ansprüche, bei dem eine entlang der Bohrerlängsachse (B) verlaufende Längsbohrung (27) in den Grundkörper (16) gebohrt, insbesondere tieflochgebohrt, wird und bei dem eine zur Bohrerlängsachse (B) winklige Querbohrung (24) in den Grundkörper (16) gebohrt wird, derart, dass die Längsbohrung (27) und die Querbohrung (24) miteinander verbunden sind.

16. Verfahren nach Anspruch 15, bei dem mindestens eine Aufnahme (17), insbesondere in Form einer Aufnahmenut, für den mindestens einen Schneideinsatz (13) der Vorbohrstufe (5) im Grundkörper (16) hergestellt wird, bei dem mindestens eine Aufnahme (17), insbesondere in Form einer Aufnahmenut, für den mindestens einen Schneideinsatz (15) der Aufbohrstufe (6) im Grundkörper (16) hergestellt wird und bei dem der jeweilige Schneideinsatz (13, 15) in die zugeordnete Aufnahme (17) eingesetzt wird, wobei vorzugsweise die Aufnahmen (17) für die Schneideinsätze (13, 15) der Vorbohrstufe (5) und der Aufbohrstufe (6) in einem Arbeitsgang im Grundkörper (16) hergestellt werden.

## Claims

1. Stepped drill bit, in particular stepped drill bit for rock, configured for use with an impact drill,
having a drill-bit shank (2),
having a plug-in end (3) which has a clamping section for being received by the drill chuck of an impact drill, and having a drilling head (4) which is arranged on that end of the drill-bit shank (2) which is remote from the plug-in end (3),
wherein the drilling head (4) has a pre-drilling step (5) for drilling a drill hole with a first diameter, and has at least one drilling-out step (6) for widening a drill hole drilled by way of the pre-drilling step (5) to a larger diameter, wherein the drilling-out step (6) is arranged offset from the pre-drilling step (5) along a drill-bit longitudinal axis (B),
wherein the stepped drill bit (1) has at least one suction-extraction-channel arrangement (7) with at least one suction-extraction channel (8) which leads from at least one suction-extraction opening (9, 9a, 9b) of the drilling head (4) through the interior of the drill-bit shank (2) to an exit opening (10) for discharging drilling dust to a suction-extraction device (11), **characterized in that**
a cutting edge (12) of the pre-drilling step (5) is formed by at least one cutting insert (13), wherein a cutting edge (14) of the drilling-out step (6) is formed by at least one separate cutting insert (15), and wherein the cutting inserts (13, 15) are arranged on a main body (16) which includes the drilling head (4).

2. Stepped drill bit according to Claim 1, **characterized in that** the main body (16) of the stepped drill bit (1) has receptacles (17) for the cutting inserts (13, 15), preferably **in that** the main body (16) has two axial, in particular cylindrical, sections (18, 19), wherein each of the sections (18, 19) has a receptacle (17) for the respective cutting insert (13, 15), furthermore preferably **in that** the two sections (18, 19) have a different respective radius (R₁, R₂), wherein the radius (R₁) of the first section (18), which has the receptacle (17) for the respective cutting insert (13) of the pre-drilling step (6), is smaller than the radius (R₂) of the second section, which has the receptacle for the respective cutting insert (15) of the drilling-out step (6).

3. Stepped drill bit according to Claim 1 or 2, **characterized in that** the stepped drill bit (1) is formed without a helical groove.

4. Stepped drill bit according to one of the preceding claims, **characterized in that** at least one suction-extraction opening (9) is a pre-drilling-step suction-extraction opening (9a) which is arranged in the region of the pre-drilling step (5), preferably arranged in the end face (20) of the drilling head (4), preferably **in that** provision is made of only a single pre-drilling-step suction-extraction opening (9a) or at least two, in particular exactly two, pre-drilling-step suction-extraction openings (9a), furthermore preferably **in that** at least one pre-drilling-step suction-extraction opening (9a) is arranged on each side of the respective cutting insert (13) of the pre-drilling step (5).

5. Stepped drill bit according to one of the preceding claims, **characterized in that** all the suction-extraction openings (9) are pre-drilling-step suction-extraction openings (9a), and/or **in that** no suction-extraction openings (9) are provided in the region of the drilling-out step (6).

6. Stepped drill bit according to one of Claims 1 to 4, **characterized in that** at least one suction-extraction opening (9) is a drilling-out-step suction-extraction opening (9b) which is provided in the region of the drilling-out step (6), preferably **in that** the drilling-out-step suction-extraction opening (9b), as seen from the drilling point (22), is provided axially behind a substantially axial cutting edge (14a) of at least one cutting insert (15) of the drilling-out step (6).

7. Stepped drill bit according to one of the preceding claims, **characterized in that** the pre-drilling step (5) has only one cutting insert (13), and/or **in that** the cutting insert (13) of the pre-drilling step (5) forms the drill-bit point (22).

8. Stepped drill bit according to one of the preceding claims, **characterized in that** the drilling-out step (6) has at least, in particular exactly, one cutting insert (15), preferably **in that** the drilling-out step (6) has at least, in particular exactly, two cutting inserts (15) or at least, in particular exactly, three cutting inserts (15) .

9. Stepped drill bit according to one of the preceding claims, **characterized in that** the cutting inserts (15) of the drilling-out step (6) are arranged at equal angular spacings around the drill-bit longitudinal axis (B) .

10. Stepped drill bit according to one of the preceding claims, **characterized in that**, in a projection of the stepped drill bit (1) in the direction of the drill-bit longitudinal axis (B), the cutting insert (13) of the pre-drilling step (5) extends along a longitudinal axis (L) extending orthogonally to the drill-bit longitudinal axis (B) or the cutting inserts (13) of the pre-drilling step (5) are arranged on a longitudinal axis (L) extending orthogonally to the drill-bit longitudinal axis (B), and **in that** the cutting inserts (15) of the drilling-out step (6) are arranged on said longitudinal axis (L).

11. Stepped drill bit according to one of the preceding claims, **characterized in that**, in a projection of the stepped drill bit (1) in the direction of the drill-bit longitudinal axis (B), the cutting insert (13) of the pre-drilling step (5) extends along a longitudinal axis (L) extending orthogonally to the drill-bit longitudinal axis (B) or the cutting inserts (13) of the pre-drilling step (5) are arranged on a longitudinal axis (L) extending orthogonally to the drill-bit longitudinal axis (B),
**in that**, in the projection of the stepped drill bit (1) in the direction of the drill-bit longitudinal axis (B), the central axes of the cutting inserts (15) of the drilling-out step (6) lie on a straight connecting line (V), and
**in that** the longitudinal axis (L) is positioned at an angle to the straight connecting line (V), preferably at an angle of 90° to the straight connecting line (V).

12. Stepped drill bit according to one of the preceding claims, **characterized in that**, in the region of their receptacle (17), the cutting inserts (13, 15) radially project beyond the main body (16), preferably **in that**, in the region of its receptacle (17), the respective cutting insert (13) of the pre-drilling step (5) radially projects 0.1 mm to 1.5 mm beyond the main body (16) and/or, in the region of its receptacle (17), the respective cutting insert (15) of the drilling-out step (6) radially projects 0.2 mm to 1 mm beyond the main body (16) .

13. Stepped drill bit according to one of the preceding claims, **characterized in that** the stepped drill bit (1) has a suction-extraction section (23) and/or a clamping section (26) at the plug-in end (3), preferably **in that** the suction-extraction section (23) is formed integrally by the main body (16), and/or **in that** the clamping section (26) is produced separately from the main body (16) and is joined, in particular soldered or welded, to the main body (16) and/or to the suction-extraction section (23).

14. Stepped drill bit according to one of the preceding claims, **characterized in that** a longitudinal bore (27) extending along the drill-bit longitudinal axis (B) is drilled, in particular deep-hole-drilled, in the main body (16), and **in that** a transverse bore (24) at an angle to the drill-bit longitudinal axis (B) is drilled in the main body (16), wherein the longitudinal bore (27) and the transverse bore (24) are connected to one another and together form the suction-extraction channel (8).

15. Method for producing a stepped drill bit (1) according to one of the preceding claims, in which a longitudinal bore (27) extending along the drill-bit longitudinal axis (B) is drilled, in particular deep-hole-drilled, in the main body (16), and in which a transverse bore (24) at an angle to the drill-bit longitudinal axis (B) is drilled in the main body (16) in such a way that the longitudinal bore (27) and the transverse bore (24) are connected to one another.

16. Method according to Claim 15, in which at least one receptacle (17), in particular in the form of a receptacle groove, for the at least one cutting insert (13) of the pre-drilling step (5) is produced in the main body (16), in which at least one receptacle (17), in particular in the form of a receptacle groove, for the at least one cutting insert (15) of the drilling-out step (6) is produced in the main body (16), and in which the respective cutting insert (13, 15) is inserted into the assigned receptacle (17), wherein preferably the receptacles (17) for the cutting inserts (13, 15) of the pre-drilling step (5) and of the drilling-out step (6) are produced in the main body (16) in a single operation.

## Revendications

1. Foret étagé, en particulier foret étagé pour roche, conçu pour être utilisé avec une perceuse à percussion, comprenant une tige de forage (2),
comprenant une extrémité d'insertion (3), qui présente une section de serrage, pour la réception par le mandrin d'une perceuse à percussion et une tête de forage (4) agencée à l'extrémité de la tige de forage (2) opposée à l'extrémité d'insertion (3),
la tête de forage (4) présentant un étage de pré-perçage (5) pour percer un trou de forage d'un premier diamètre et au moins un étage d'alésage (6) pour l'élargissement d'un trou de forage percé à l'étage de pré-perçage (5) à un diamètre plus grand, l'étage d'alésage (6) étant agencé de manière décalée par rapport à l'étage de pré-perçage (5) le long d'un axe longitudinal (B) du foret, le foret étagé (1) présentant au moins un agencement de canal d'aspiration (7) avec au moins un canal d'aspiration (8) qui s'étend depuis au moins une ouverture d'aspiration (9, 9a, 9b) de la tête de forage (4), à travers l'intérieur de la tige de forage (2), jusqu'à une ouverture de sortie (10) pour l'évacuation de la poussière de forage vers un dispositif d'aspiration (11),
**caractérisé en ce que**
un tranchant (12) de l'étage de pré-perçage (5) est formé par au moins un insert de coupe (13), un tranchant (14) de l'étage d'alésage (6) étant formé par au moins un insert de coupe séparé (15), et les inserts de coupe (13, 15) étant agencés sur un corps de base (16) entourant la tête de forage (4).

2. Foret étagé selon la revendication 1, **caractérisé en ce que** le corps de base (16) du foret étagé (1) présente des logements (17) pour les inserts de coupe (13, 15), de préférence **en ce que** le corps de base (16) présente deux sections axiales (18, 19), en particulier cylindriques, l'une des sections (18, 19) présentant un logement (17) pour l'insert de coupe respectif (13, 15), de préférence encore, **en ce que** les deux sections (18, 19) présentent chacune un rayon différent (R₁, R₂), le rayon (R₁) de la première section (18), qui présente le logement (17) pour l'insert de coupe respectif (13) de l'étage d'alésage (6), étant plus petit que le rayon (R₂) de la deuxième section, qui présente le logement pour l'insert de coupe respectif (15) de l'étage d'alésage (6).

3. Foret étagé selon la revendication 1 ou 2, **caractérisé en ce que** le foret étagé (1) est conçu sans rainures hélicoïdales.

4. Foret étagé selon l'une des revendications précédentes, **caractérisé en ce qu'**au moins une ouverture d'aspiration (9) est une ouverture d'aspiration (9a) d'étage d'alésage agencée dans la zone de l'étage de pré-perçage (5), de préférence dans la face frontale (20) de la tête de forage (4), de préférence **en ce qu'**il n'est prévu qu'une seule ouverture d'aspiration (9a) d'étage d'alésage ou au moins deux, en particulier exactement deux, ouvertures d'aspiration (9a) d'étage d'alésage, de préférence encore, **en ce qu'**au moins une ouverture d'aspiration (9a) d'étage d'alésage est agencée de chaque côté de l'insert de coupe respectif (13) de l'étage de pré-perçage (5).

5. Foret étagé selon l'une des revendications précédentes, **caractérisé en ce que** toutes les ouvertures d'aspiration (9) sont des ouvertures d'aspiration (9a) d'étage d'alésage et/ou **en ce qu'**aucune ouverture d'aspiration (9) n'est prévue dans la zone de l'étage d'alésage (6).

6. Foret étagé selon l'une des revendications 1 à 4, **caractérisé en ce qu'**au moins une ouverture d'aspiration (9) est une ouverture d'aspiration (9b) d'étage d'alésage prévue dans la zone de l'étage d'alésage (6), de préférence **en ce que** l'ouverture d'aspiration (9b) d'étage d'alésage est prévue, vue depuis la pointe de forage (22), dans la direction axiale derrière un tranchant (14a) sensiblement axial d'au moins un insert de coupe (15) de l'étage d'alésage (6).

7. Foret étagé selon l'une des revendications précédentes, **caractérisé en ce que** l'étage de pré-perçage (5) ne comporte qu'un seul insert de coupe (13) et/ou **en ce que** l'insert de coupe (13) de l'étage de pré-perçage (5) forme la pointe du foret (22).

8. Foret étagé selon l'une des revendications précédentes, **caractérisé en ce que** l'étage d'alésage (6) présente au moins, notamment exactement, un insert de coupe (15), de préférence **en ce que** l'étage d'alésage (6) présente au moins, notamment exactement, deux inserts de coupe (15) ou au moins, notamment exactement, trois inserts de coupe (15).

9. Foret étagé selon l'une quelconque des revendications précédentes, **caractérisé en ce que** les inserts de coupe (15) de l'étage d'alésage (6) sont agencés à la même distance angulaire autour de l'axe longitudinal (B) du foret.

10. Foret étagé selon l'une des revendications précédentes, **caractérisé en ce que**, lorsque le foret étagé (1) est projeté dans la direction de l'axe longitudinal (B) du foret, l'insert de coupe (13) de l'étage de pré-perçage (5) s'étend le long d'un axe longitudinal (L) orthogonal à l'axe longitudinal (B) du foret, ou les inserts de coupe (13) de l'étage de pré-perçage (5) sont agencés sur un axe longitudinal (L) qui est orthogonal à l'axe longitudinal (B) du foret, et **en ce que** les inserts de coupe (15) de l'étage d'alésage (6) sont agencés sur cet axe longitudinal (L).

11. Foret étagé selon l'une des revendications précédentes, **caractérisé en ce que**, dans une projection du foret étagé (1) dans la direction de l'axe longitudinal (B) du foret, l'insert de coupe (13) de l'étage de pré-perçage (5) s'étend le long d'un axe longitudinal (L) qui est orthogonal à l'axe longitudinal (B) du foret, ou les inserts de coupe (13) de l'étage de pré-perçage (5) sont agencés sur un axe longitudinal (L) qui est orthogonal à l'axe longitudinal (B) du foret, de sorte que, dans la projection du foret étagé (1) dans la direction de l'axe longitudinal (B) du foret, les axes centraux des inserts de coupe (15) de l'étage d'alésage (6) se trouvent sur une ligne de liaison (V) et que l'axe longitudinal (L) est agencé de manière angulaire par rapport à la ligne de liaison (V), de préférence à un angle de 90° par rapport à la ligne de liaison (V).

12. Foret étagé selon l'une des revendications précédentes, **caractérisé en ce que** les inserts de coupe (13, 15) dépassent radialement du corps de base (16) dans la zone de leur logement (17), de préférence **en ce que** l'insert de coupe respectif (13) de l'étage de pré-perçage (5) dépasse radialement du corps de base (16) de 0,1 mm à 1,5 mm dans la zone de son logement et/ou l'insert de coupe respectif (15) de l'étage d'alésage (6) dépasse du corps de base (16) de 0,2 mm à 1 mm dans la zone de son logement (17).

13. Foret étagé selon l'une des revendications précédentes, **caractérisé en ce que** le foret étagé (1) présente une section d'aspiration (23) et/ou une section de serrage (26) à l'extrémité d'insertion (3), de préférence **en ce que** la section d'aspiration (23) est réalisée d'un seul tenant avec le corps de base (16) et/ou **en ce que** la section de serrage (26) est fabriquée séparément du corps de base (16) et est assemblée, notamment brasée ou vissée, au corps de base (16) et/ou à la section d'aspiration (23).

14. Foret étagé selon l'une des revendications précédentes, **caractérisé en ce qu'**un alésage longitudinal (27) s'étendant le long de l'axe longitudinal (B) du foret est percé dans le corps de base (16), en particulier un perçage profond, et **en ce qu'**un alésage transversal (24) est percé dans le corps de base (16) en formant un angle avec l'axe longitudinal (B) du foret, l'alésage longitudinal (27) et l'alésage transversal (24) étant reliés entre eux et formant ensemble le canal d'aspiration (8).

15. Procédé de fabrication d'un foret étagé (1) selon l'une des revendications précédentes, dans lequel un alésage longitudinal (27) s'étendant le long de l'axe longitudinal (B) du foret est percé dans le corps de base (16), en particulier un perçage profond, et dans lequel un alésage transversal (24) formant un angle avec l'axe longitudinal (B) du foret est percé dans le corps de base (16), de telle sorte que l'alésage longitudinal (27) et l'alésage transversal (24) soient reliés entre eux.

16. Procédé selon la revendication 15, dans lequel au moins un logement (17), notamment sous la forme d'une rainure de réception, est réalisé dans le corps de base (16) pour ledit au moins un insert de coupe (13) de l'étage de pré-perçage (5), dans lequel au moins un logement (17), notamment sous la forme d'une rainure de réception, pour ledit au moins un insert de coupe (15) de l'étage d'alésage (6) est fabriqué dans le corps de base (16) et dans lequel l'insert de coupe respectif (13, 15) est inséré dans le logement (17) associé, les logements (17) pour les inserts de coupe (13, 15) de l'étage de pré-perçage (5) et de l'étage d'alésage (6) étant de préférence fabriqués en une seule opération dans le corps de base (16).
